# EUROPEAN PATENT SPECIFICATION

(11) **EP 0 764 810 B1**
(45) Date of publication and mention of the grant of the patent: **18.08.1999**
(21) Application number: 96110125.0
(22) Date of filing: 22.06.1996
(51) Int. Cl.: F16L 59/05, F16L 59/16, F16L 53/00, B65D 90/06

(54) **Insulation and/or heating and/or colling system with prefabricated elements separated from the pipes and components of the plants through which process fluids are flowing**
Isolierung und/oder Heiz- und/oder Kühlsystem mit vorgefertigten Elementen getrennt von den Rohren
Isolation et/ou système de chauffage et/ou système de réfrigération avec éléments préfabriqués séparés des tuyaux

(30) Priority: 20.09.1995 IT SV950016; 13.05.1996 IT GE960042
(43) Date of publication of application: 26.03.1997
(73) Proprietor: Scarzella, Luciano, 17017 Millesimo (SV) (IT)
(72) Inventor: Scarzella, Luciano, 17017 Millesimo (SV) (IT)
(74) Representative: Ferrarotti, Giovanni

(56) References cited:
- DE-A- 3 205 957
- DE-A- 3 534 374
- GB-A- 2 186 338

## Description

It is well known that in industry, especially in the chemical and food industry, process fluids, whether liquid, gas or vapour, have to be kept at a constant temperature in the transfer or processing lines, in tanks and other plant components (valves, pumps, etc.) so as to ensure that the fluid keeps its programmed characteristics as to flowability, stability and composition.

At present, pipe lagging or insulation is obtained with pipe enveloping sections or shells, but such simple insulation is not always sufficient to maintain constant fluid characteristics. In such case, the process piping is jacketed with another concentric pipe thus obtaining a hollow space between the two pipe walls through which the heating or cooling fluid is conveyed. The various hollow spaces are then interconnected by means of tubular joints and the heating or cooling fluid usually flows one-way only through these hollows spaces.

This insulation system has, however, some significant drawbacks.

The first being due to the fact that the internal process pipe acts as the inner wall of the hollow space so that, in case of failure of the process pipe, the heating or cooling fluid may enter the process fluid or vice-versa. This rather often causes contamination which is always extremely serious and dangerous and requires a continuous fluid control involving high operating costs and economic damage due to the considerable quantity of circulating fluid that has to be eliminated.

A second drawback concerns the fact that a quick and easy location of the leak is impossible and requires expensive measures to trace the contamination source. Another drawback is due to the poor distribution of the heating or cooling fluid inside the hollow space, also deriving from deposits and fouling.

Then there is the fact that the external pipe forming the hollow space together with the process piping, requires insulation too, which is normally obtained with one of the above mentioned methods.

All these drawbacks are further intensified by the fact that, especially in the food processing industry, the process piping and the external pipe, together forming the hollow space, have constantly to be kept clean or shifted, for operating or production purposes.

Furthermore, the internal process piping shall be in special material such as low carbon steel with high corrosion strength. Finally, the manufacture of such jacketing is rather difficult because it calls for special items e.g. pumps, valves, filters, etc. which at best, are simply insulated and are sometimes not even heat loss protected.

Tanks and large equipment (boilers, heaters, bubble towers etc.) are also subject to the same problems, since they are now simply insulated or externally jacketed to form a hollow space through which the heating or cooling fluid flows and are then externally lagged. This procedure has the same drawbacks as the above described system.

This invention has the aim to eliminate the afore said drawbacks and to provide a quick and easy way to identify leaks in all plant components, including special items, fittings and accessories.

According to this invention, the insulation of small and medium sized pipes is obtained by a jacket which is independent from the process piping and is consisting of two concentric pipes, the inner one of which is in contact with the outer surface of the process pipe, whereas the outer pipe is insulated.

The process pipe to be cooled/heated may obviously be inserted in the inner tube of the jacket, although it is preferable that the insulating jacket be formed by two or more moulded sheets (shells) jointed lengthwise along diametric lines, so that this insulating system can be independently removed. Thus, prefabricated insulating elements are obtained, complete with one or more chambers through which the heating or cooling fluid is circulating and provided with an external insulation, which can be assembled and disassembled at will while the process piping remains untouched. This will prevent contamination of the process fluid and permits quick and easy detection of any leaks.

The pipes forming the insulating jacket are manufactured as a series of modular, multi-layer double-wall sections of prefixed length, interconnected by unions to ensure the continuous flow of the heating or cooling fluid. The heating or cooling fluid in this chamber or these chambers may flow either one-way or in more directions.

Furthermore, according to this invention, insulation of large sized pipes or tanks or bulky equipment is achieved by independent heating or cooling jackets, consisting of modular, straight multi-layer elements, each element having a trapezoid cross section and formed by an internal pipe in any suitable material but normally in aluminium, connected or en-bloc moulded with one surface plate turned towards the surface to be insulated, an intermediate layer in foamed insulating material and a finishing layer, usually in plastic material. The outer layer terminates at both ends with longitudinal seats housing the double-O-ring seal to ensure articulated coupling of adjacent modular sections, thus obtaining a longitudinal hinge which permits coupling and reciprocal rotation of the various elements.

Assembly of a sufficient number of elements will permit to adjust the jacket to the outside diameter of the piping system, or tank, or equipment to be heated or refrigerated.

The jacket is connected to the plating at one end by means of a fixed coupling, whereas a snap fastener at the other end will ensure quick assembly and disassembly of the element.

The outer surface of the flat plates connected to or forming an integral part of the pipe through which the heating or cooling fluid is flowing, is in touch with the plating to be heated or refrigerated, so that the pipe or equipment remain completely independent of the insulating system.

The various pipes through which the heating or cooling fluid flows are separately or series connected by moulded tubes located on both sides of the modular jacketing elements.

As to the engineering of the system components according to this invention, the following technique has been adopted. An outer shell having a simple geometrical shape, e.g. parallelepiped, cylindrical, spherical etc. enclosing the plant component, will leave ample space between the inner shell wall and the equipment which of course will have the proper shaping for its function. This shell may be in two or more parts; it will have an outer skin and a lining in foamed material, proper inlet and outlet fittings for the heating or refrigerating fluid circulating between the shell and the equipment, as well as openings for external connections of the equipment to be jacketed.

To guarantee a perfect seal of the hollow space between the shell and the equipment, the hollow spaces are lined with flexible thermosetting resin steeped braiding, properly jointed to the inlets and outlets of the heating or cooling fluids so that these braidings will swell and harden when hot pressurized water is circulating inside the hollow spaces. In this way, the braiding will stick and adhere to the equipment to be jacketed or adjusted to the form and shape of the equipment to be insulated, so that all surfaces and shapings will benefit from the heating or refrigerating action of the fluid flowing through the hollow space(s).

In this case too, the insulating envelope and the related hollow spaces may be easily assembled and disassembled, thus facilitating maintenance of the equipment and cutting its costs.

The concept of this invention is unique, whether implemented with modular duplex pipe elements or with pipes and plates or with a shell and hollow space, it always involves the utilization of pipes and hollow spaces through which the heating or refrigerating fluid is conveyed, these pipes and hollow spaces being independent of the outer surface of the equipment to be treated, whereas the inner surface of the pipes or tube plates or of the braided lining of the hollow spaces are in touch with the surface to be insulated thus ensuring an excellent heat exchange between the process fluid and the heating or cooling fluid.

In addition, all solutions permit a simple, cheap and independent assembly and disassembly of the jacket. The invention in question is illustrated in its practical and exemplifying implementation, in the enclosed drawings in which:
**Fig.1** shows a front view of a small or medium sized process pipe insulated by a double annular pipe mounted by insertion.
**Fig.2** shows a front view of a small or medium sized process pipe insulated by a duplex pipe formed by two assembled shells.
**Fig. 3** shows a central lengthwise section of the insulated pipe according to Z-Z shown in fig.2

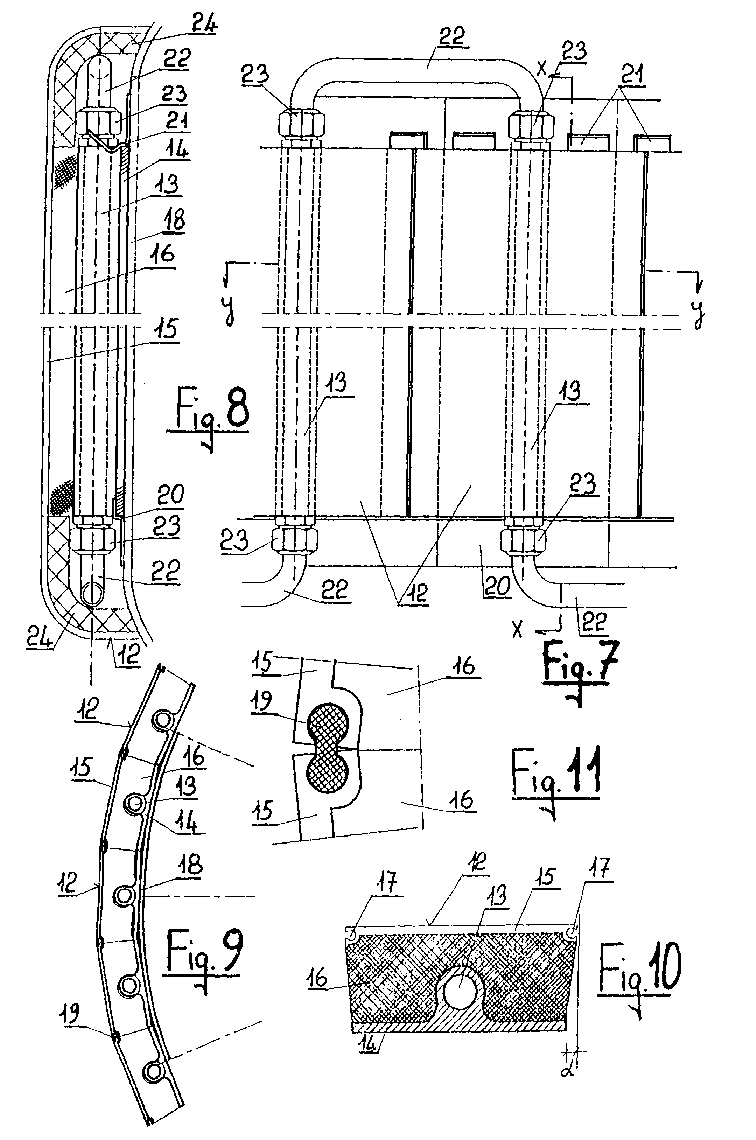

**Fig. 4** shows a cross section of the pipe insulated according to A-A shown in fig.3.

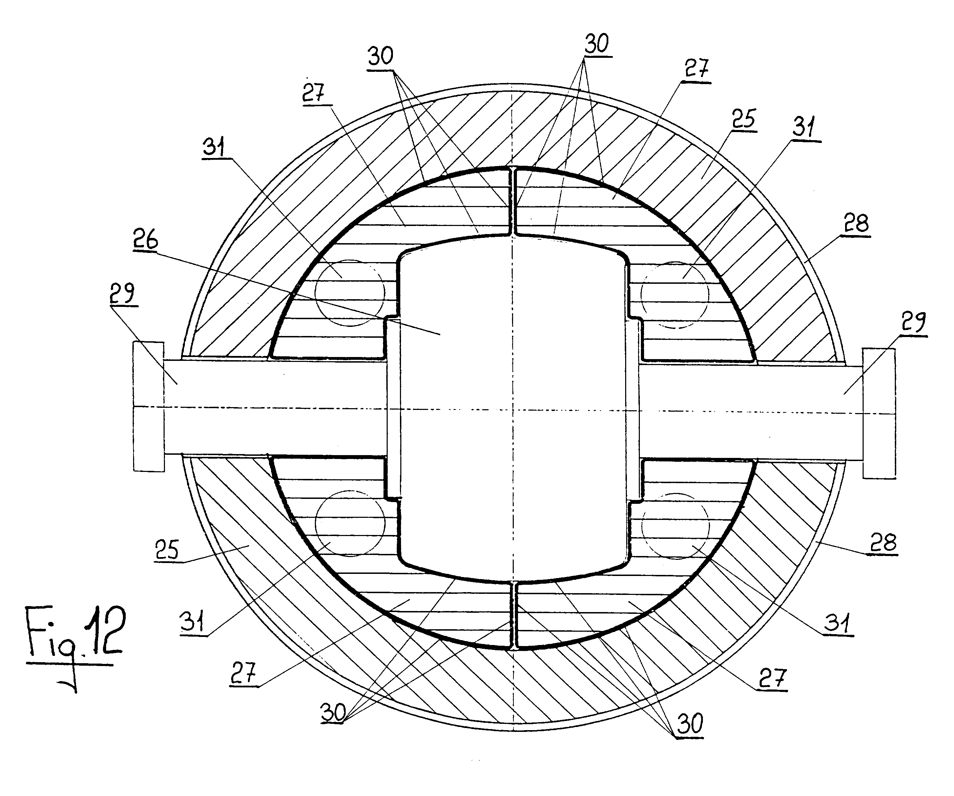

**Fig.5** shows the cross section of the pipe insulated according to B-B in fig.3.
**Fig.6** shows a longitudinal section o a typical bend, insulated according to Figg. 2 and 3.
**Fig. 7** shows a front view of the heating or cooling jacket formed by several modular units, especially suitable for large sized pipes, tanks and equipment.
**Fig. 8** shows the cross section of a modular element according to X-X of fig.7
**Fig. 9** shows a horizontal section according to Y-Y of fig.7 of modular elements insulating a cylinder shaped tank or a large-sized pipe.
**Fig.10** shows a magnified horizontal section of a modular insulating element.
**Fig. 11** shows a magnified horizontal section of an articulated coupling system of two insulating elements.
**Fig.12** shows a vertical cross section of a typical pump insulation.
**Fig. 13** shows an exploded view of the pump insulation illustrated in fig. 12
**Fig. 14** shows the insulated pump assembly.

With reference to the above drawings, the insulation of a medium-small diameter process pipe 1 involves the shaping and prefabrication of a duplex pipe 2,3 forming a jacket 4 through which the heating or cooling fluid flows. The duplex pipe 2,3 is placed lengthwise and axially on the outside of the process pipe 1 so that its inner pipe 2 is fully in touch with the outside of the process tube 1. The outside of tube 3 of the duplex pipe 2,3 is coated with insulating material 5 which is topped by a covering 6 The double pipe 2,3, insulating material 5 and the outer covering 6 are forming a prefabricated unit; this process pipe 1 is inserted in the inner tube 2 of the unit.

Modular insulating units are thus obtained with chambers 4 through which the heating or cooling fluid flows, these chambers 4 being interconnected by pipe unions with simple or multiple circulation.

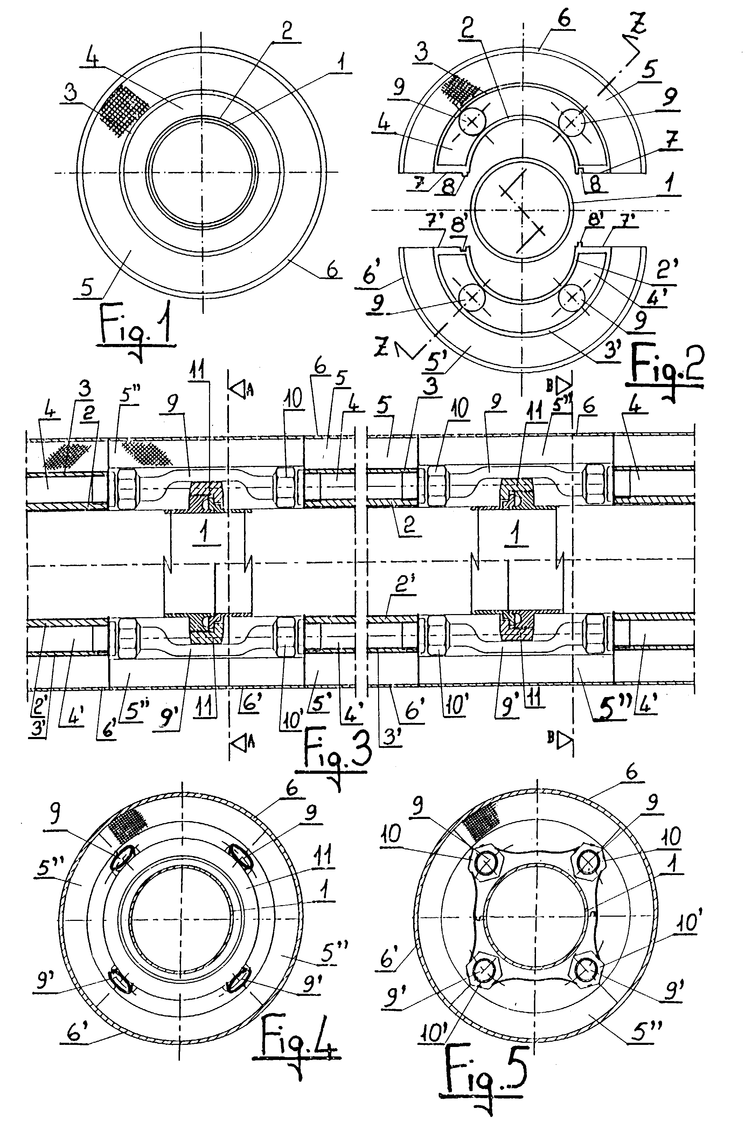

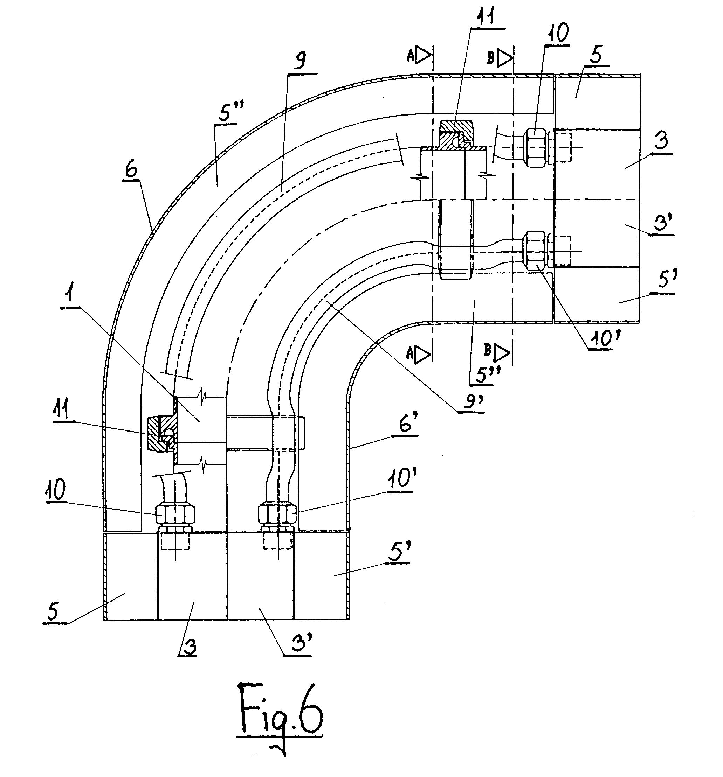

The above exemplified implementation shown in fig. 1 has, however, the drawback that the insulation 2, 3,5,6 in one single prefabricated assembly is difficult to install and to remove since its insertion and removal are only possible by disassembly and reassembly of the process pipe 1.

Therefore, it would be preferable to prefabricate the duplex pipe 2,3 and its insulation 5 and coating 6 as two or more shells to be assembled and placed on the outside of the process pipe 1 as illustrated in fig. 2 and 3.

According to this preferential solution, the duplex pipe consists of two semicircular shells 2,3 and 2'3', while the insulation and outer coating too are formed by the correlated semicircular elements 5, 6, 5', 6' thus forming two chambers 4,4' closed by radial longitudinal walls 7, 7' that will be superimposed after assembly.

Longitudinal telescoping shapings 8, 8' will ensure an easy and stable snap assembly of the two shells.

The various modular chambers 4, 4' of the duplex pipes 2,3, 2',3' are interconnected by means of one or two tubes 9, 9', properly linked to the chambers by fittings 10, 10' and properly shaped so as to bypass the threaded or flanged fittings of the process pipe.

The elements forming the connections 9, 9' are provided with a lagging 5'' which is installed and externally covered .

Insulation of the bends or other special items for the process piping 1 is as described for the straight pipeline shown in fig. 6.

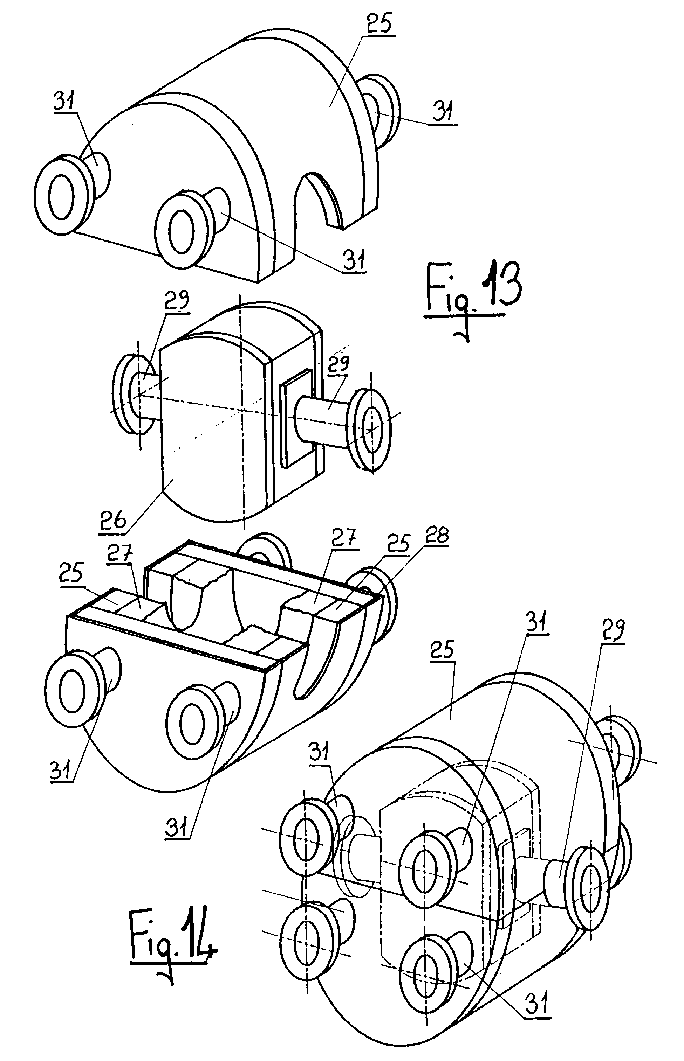

As for the insulation of large sized pipes, tanks, containment and processing equipment, we refer to the figures 7 through 11. With reference to these illustrations, 12 refers to a modular insulating element forming a heating or cooling jacket consisting, as shown in Fig. 10, of a inner longitudinal pipe 13 fitted with a longitudinal plate 14 in touch with the outer plating of the equipment 18 that has to be heated or cooled. An outer skin 15 topping the outside of the intermediate lagging layer 16 is located on the other side of the plate 14.

This element 12 of suitable length and width has a trapezoid section, the legs of which are forming a properly raking angle .

Lengthwise shapings 17 are provided at both ends of the outer skin 15; these shapings 17 will receive an articulated coupling section 19 of two adjacent elements as shown in Fig. 11. For example, these shapings 17 may be channel type whereas the structural shape 19 may have the shape of spectacles.

However, any other system for articulated coupling of the two elements 12 may be adopted.

Jointing of a proper number of elements 12 will permit to adjust the jacket to the outside diameter of the tank, equipment of piping to be heated or cooled which have usually a cylindrical surface.

The jacket is continuously or at intervals anchored to the cylindrical plating of the equipment to be insulated by means of joint plate 20 also receiving the various plates 14; on the other it is flexibly anchored by a snap fastener 21 which permits to secure the plate 14 to the plating 18 by simple pressure.

The heating or cooling system will consist of a set of elements 12 provided with plates 14 in touch with the plating 18 to be heated or cooled; the fluid is provided by a heat exchanger and is circulated in the parallel tubes which are part of the plates 14.

It is clear that the assembly of modular elements 12 will be positioned with the axis of the tubes 13, through which the heating or cooling fluid is circulated, parallel to the axis of the cylindrical equipment or pipe to be insulated. It should be noted that such euipment is usually of the upright type, whereas piping systems may have their axis in vertical or horizontal position.

The various pipes 13 are interconnected at the top and at their lower end by properly shaped tubular sections 22, radiused to each pipe 13 by threaded fittings 23.

The interconnection between the various paralleled pipes 13 will determine the flow through the various elements 12, which may be single or multi-sequenced flow type. The upper and lower ends of the equipment will be insulated with properly insulated shapements 24.

These modular elements 12 may be manufactured on industrial scale in standard sizes with a length ranging for example between 8 and 12 linear metres and cut to size during the installation of the jacket. The height of the various elements 12 will comply with the height of the equipment or with the length of the piping system to be insulated. Pipes of greater length will require several assemblies of modular elements positioned in sequence along the piping.

Obviously, the modular element assembly 12 besides being used for cylindrical equipment and pipes as described above, may also be adopted for equipment and pipes having a different configuration, e.g. an elliptic shape.

It is also possible to use these modular elements on equipment and pipes having a polygonal, square o rectangular section etc. . In such case, the flat surface to be insulated will be covered by a modular assembly, the modular elements of which will be jointed along the edges.

The advantages of this insulation system formed by the above described modular elements are listed below:
- fabrication of one single insulating/thermostable system;
- The insulating system remains independent of the pipe or equipment to be insulated. The modular system may be implemented after the manufacture of the equipment or of the piping system;
- maintenance of the modular system will not require removal of the pipe or equipment;
- the heat transfer fluid and thermoregulated fluid will be completely separated and will not mix even in case of pipe failure;
- manufacture and installation are easy.

As to the problem regarding insulation, heating or cooling of accessories like pumps, valves, filters etc. the procedure to follow according to this invention, is described hereinafter, with reference to the figures 12 through 14:

An outer shell 25 having a simple geometrical shape, for example a parallepiped, cylindrical, spherical shape is moulded to enclose the plant component 26, which in the figures is a pump, while leaving ample space 27 between the inner wall of the shell 25 and the equipment 26 to be insulated.

This shell may be fabricated in two or more parts and consists of an outer finishing skin 28 formed by an insulating layer, usually in foamed material. The shell 25 has of course openings for connection to the outer surface of the equipment to be insulated and in this case, with the intake and delivery pipes 29 of the pump 26.

The hollow space or spaces 27 will act as passage ways for the heating or cooling fluid and a multiple number of braidings 30 will line these hollow spaces to provide a perfect fluid seal; the braidings 30 will be flexible and steeped in thermosetting resins, provided with inlet and outlet openings 31 for the heating or cooling fluids. These braidings 30 will be inserted in the hollow spaces 27 between the outer shell 25 and the equipment 26, and will be inflated and hardened by the circulation of hot pressurized water. The braidings 30 will thus settle against the equipment 26 to be insulated or against its dummy, fully adjusting to the configuration and shape of the equipment to be insulated, enveloping its surface as well as all shapings in touch with the heating or cooling fluid flowing through these braidings 30.

In this case too, the fluid may circulate one-way or in several directions through these braidings 30.

The insulating systems according to this invention is therefore low-cost, practical and independent of the equipment to be insulated, it also permits easily to detect leaks thus preventing contamination of the process fluid; installation and disassembly of the insulation are easy, thus cutting the maintenance costs of the equipment.

Obviously, the invention here described for exemplification but not limiting purposes may be subject to variations and adjustment based upon the size of the pipes, equipment and special items to be insulated and its components may be replaced by other similar parts having the same function but always within the scope of the following claims.

## Claims

1. System for the insulation and/or heating and/or cooling of pipes, tanks and plant components through which processing fluids are conveyed, characterized in that it features independent, prefabricated modular elements having the form of a duplex pipe (2, 3) forming a jacket (4) for the insulation of small and medium diameter piping systems (1), the inner tube (2) closely enveloping the process pipe (1) or is formed by a pipe (13) fitted with a plate (14) in touch with the outer surface of large diameter pipes or in touch with the plating (18) of equipment to be insulated, or is formed by hollow spaces (27) around the equipment (26) to be insulated, so that the fluid heating or cooling the process fluid flows in single or multiple sequences through the jacket (4) as well as through the pipe (13) and the hollow spaces (27), and that the duplex pipes (2, 3), the pipes (13, 14) or hollow spaces (27) feature an external insulating layer (15, 16, 25) topped by a finishing skin (6, 15, 28) so that the process fluid is heated or cooled independently of the process equipment, thus permitting a fast and easy detection of leaks, a simple and low-cost installation and disassembly of the insulation without involving the process equipment.

2. System as described in claim 1, ***characterized*** in that the duplex pipe (2,3,), its insulation (5) and covering (6) form one single, enbloc structured modular element into which the process pipe (1) to be insulated is inserted.

3. System as described in claim 1, ***characterized*** in that the duplex pipe (2,3,), its insulation (5) and covering (6) is formed by at least two shells (2,3,5,6,2',3',5',6') creating by means of radial closing walls (7, 7') at least two chambers (4, 4') through which the heating or cooling fluid is conveyed in co-flow or countercurrent flow and that these shells feature longitudinal shapings (8, 8') for snap assembly of the shells enveloping the process pipe (1).

4. System as described in claim 1, ***characterized*** in that the modular element (12) formed by a pipe (13) and plate (14), features at one end of its external skin (15) longitudinal shapings (17) for example channel sections apt to lodge a structural shape (19) having for example a spectacle section for articulated jointing of two adjacent elements (12) so as to form an assembly of modular elements enveloping the equipment to be insulated.

5. System as described in claim 1, ***characterized*** in that the modular elements (12) formed by a pipe (13) and plate (14) have a trapezoid section so as to facilitate adjustment of the modular assembly to the surface of the equipment to be insulated.

6. System as described in claim 1, ***characterized*** in that the modular assembly (12) formed by a pipe (13) and plate (14) is secured at one end, continuously or at intervals by a joint plate (20) whereas on the other end it is flexibly anchored by a snap fastener (21).

7. System as described in claim 1, ***characterized*** in that the chambers (4) of the duplex pipes (2,3,) or the pipes (13) and plates (14) of the various modular elements are interconnected at their end sides or at the top and bottom by properly shaped tubular unions (9, 22) to ensure the continuous flow of the heating or cooling fluid.

8. System as described in claim 1, ***characterized*** in that the end sides where the tubular unions (9,22) connecting the various chambers (4) or tubes (13) are located, are provided with a properly shaped insulation (5", 24) protected by an outer skin.

9. System as described in claim 1, ***characterized*** in that the modular unit (12) formed by a pipe (13) and plate (14) envelops the pipe or equipment whatever its cross section (whether circular, elliptic or polygonal) so that the various plates (14) are resting against the plating (18) to be insulated.

10. System as described in claim 1, ***characterized*** in that the hollow spaced insulating element (27) features an outer insulating shell (25) prefabricated enbloc or in several parts to be assembled later, in order to form this hollow space (27) between the shell and the equipment (26) to be insulated, so that the heating or cooling fluid can flow through this hollow space (27).

11. System as described in claim 1 and 10, ***characterized*** in that the hollow space (27) may be single or multiple.

12. System as described in claim 1 and 10, ***characterized*** in that flexible braidings (30) steeped in thermosetting resin are lining the hollow space(s), these braidings being provided swith inlets and outlets for the heating or cooling fluid, the braidings (30) after their insertion in the hollow spaces (27) being inflated and hardened by pressurized hot water circulation so that they will stick to the outer surface of the equipment (26) to be insulated.

## Patentansprüche

1. Isolier- und/oder Heiz- und/oder Kühlsystem von Rohren, Tanks und Komponenten der Anlage, durch die Prozeßfluida geleitet werden, gekennzeichnet dadurch, daß es voneinander unabhängige, vorgefertigte Modularelemente vorsieht, die aus einem doppelten Rohr (2, 3) gebildet sind, das eine Ummantelung (4) für die Isolierung von Rohren (1) von kleinem und mittlerem Durchmesser bildet, wo das Innenrohr (2) das Prozeßrohr (1) einhüllt und in enger Berührung mit ihm steht, oder aus einem Rohr (13), versehen mit einer Platte (14) in Berührung mit der Außenseite der Rohre mit großem Durchmesser oder in Berührung mit der Beplattung (18) von zu isolierenden Apparaten, oder aus Hohlräumen (27), die die zu isolierenden Apparatur (26) verkleiden, so daß das Mittel, das das Prozeßfluid erhitzt oder kühlt, in einzelner oder mehrfacher Folge durch die Ummantelung (4), sowie durch das Rohr (13) und die Hohlräume (27) fließt, und daß die Doppelrohre (2, 3), die Rohre (13) oder Hohlräume (27) an der Außenseite eine Isolierschicht (5, 16, 25) darstellen, versehen mit einer Außenverkleidung (6, 15, 28), so daß die Erwärmung oder Kühlung des Prozeßfluids unabhängig von der Prozeßapparatur erfolgt und ein schnelles und leichtes Auffinden von Undichtigkeiten und ein einfacher und wirtschaftlicher Ein- und Ausbau der Isolierung ermöglicht wird, ohne die Prozeßapparatur zu betreffen.

2. System wie in Anspruch 1 beschrieben, gekennzeichnet dadurch, daß das Doppelrohr (2, 3), seine Isolierung (5) und Verkleidung (6) ein einziges Modularelement sind, gebildet in einem einzigen Stück, in das das zu isolierende Prozeßrohr (1) eingeführt wird.

3. System wie in Anspruch 1 beschrieben, gekennzeichnet dadurch, daß das Doppelrohr (2, 3) mit der bezüglichen Isolierung (5) und Verkleidung (6) aus mindestens zwei Schalen (2, 3, 5, 6, 2', 3', 5', 6',) gebildet ist, die durch radiale Schließwände (7) mindestens zwei Kammern (4, 4') bilden, durch die das wärmende oder kühlende Mittel in gleicher Strömung oder in Gegenströmung befördert wird, und daß diese Schalen Längsprofile (8, 8') für einen Schnappzusammenbau der Schalen aufweisen, die das Prozeßrohr (1) umgeben.

4. System wie in Anspruch 1 beschrieben, gekennzeichnet dadurch, daß das Modularelement (12), gebildet aus einem Rohr (13) und der dazugehörigen Platte (14), an einem Ende seiner Außenverkleidung (15) Längsprofile (17) aufweist, z. B. C-förmige, um das Profil (19) zu empfangen, das z. B. brillenförmig ist, für eine Gelenkverbindung von zwei nebeneinanderliegenden Elementen (12), um eine Einheit von Modularelementen zu bilden, die die zu isolierende Apparatur umgibt.

5. System wie in Anspruch 1 beschrieben, gekennzeichnet dadurch, daß das Modularelement (12) in Form von einem Rohr (13) und der dazugehörigen Platte (14) einen trapezförmigen Schnitt hat, um die Anpassung der Modulareinheit an die Oberfläche der zu isolierenden Apparatur zu erleichtern

6. System wie in Anspruch 1 beschrieben, gekennzeichnet dadurch, daß die Einheit der Modularelemente (12) durch ein Rohr (13) mit dazugehöriger Platte (14) an der einen Seite durchgehend oder streckenweise durch einen Befestigungswinkel (20) befestigt ist und an der anderen Seite durch eine elastische Schnappverankerung (21).

7. System wie in Anspruch 1 beschrieben, gekennzeichnet dadurch, daß die Kammern (4) der Doppelrohre (2, 3) oder die Rohre (13) und Platten (14) der verschiedenen Modularelemente am oberen Teil oder an der oberen und unteren Seite durch passend geformte Rohrabschnitte (9, 22) miteinander verbunden sind, um den kontinuierlichen Fluß des wärmenden oder kühlenden Mittels zu garantieren.

8. System wie in Anspruch 1 beschrieben, gekennzeichnet dadurch, daß die Enden, an denen Rohrverbindungsstücke (9, 22) zwischen den verschiedenen Kammern (4) oder zwischen den verschiedenen Rohren (13) angebracht sind, eine passend geformte Isolierung (5", 24) aufweisen, die durch eine Außenverkleidung geschützt ist.

9. System wie in Anspruch 1 beschrieben, gekennzeichnet dadurch, daß die Modulareinheit (12), die sich aus einem Rohr (13) und einer Platte (14) bildet, das Rohr oder die Apparatur mit beliebigem Schnitt (entweder rund, ellipsenförmig oder vieleckig) umhüllt, damit sich die verschiedenen Platten (14) gegen die zu isolierende Beplattung (18) stützen.

10. System wie in Anspruch 1 beschrieben, gekennzeichnet dadurch, daß das Isolierelement mit Hohlraum (27) eine vorgefertigte isolierende Außenhülle (25) vorsieht, in einem einzigen Stück oder aus mehreren Teilen, die dann später zusammengesetzt werden, um diesen Hohlraum (27) zwischen der Hülle und der zu isolierenden Apparatur (26) zu bilden, wo in dem genannten Hohlraum (27) das wärmende oder kühlende Mittel fließen kann.

11. System wie in Anspruch 1 und 10 beschrieben, gekennzeichnet dadurch, daß der Hohlraum (27) einzeln oder mehrfach sein kann.

12. System wie in Anspruch 1 und 10 beschrieben, gekennzeichnet dadurch, daß der Hohlraum oder die Hohlräume (27) mit einem Geflecht (30) ausgekleidet sind, das biegsam und mit wärmehärtendem Harz durchtränkt ist; dieses Geflecht ist mit Einlaß- und Auslaßöffnungen (31) für das wärmende oder kühlende Mittel versehen; das Geflecht (30) wird nach Einfügen in die Hohlräume (27) durch die Zirkulation von unter Druck gesetztem heißem Wasser aufgebläht und gehärtet, so daß es an der zu isolierenden äußeren Oberfläche der Apparatur (26) anhaftet.

## Revendications

1. Système de calorifugeage et/ou de chauffage et/ou de refroidissement de tuyaux, réservoirs et composants des installations dans lesquels sont transportés des fluides de traitement, *caractérisé* par le fait que des éléments préfabriqués modulaires indépendants sont formés d'un double tuyau (2,3) formant une chemise (4) pour le calorifugeage de tuyauteries (1) de petit et moyen diamètre, dont le tube intérieur (2) enveloppe et est en contact serré avec le tuyau de traitement (1) ou bien que ces éléments sont formés d'un tuyau (13) muni d'une plaque (14) en contact avec l'extérieur des tuyaux de gros diamètre ou avec l'armature (18) des appareils à isoler, ou encore que ces éléments sont formés d'interstices (27) autour de l'appareillage (26) à calorifuger de façon que le fluide chauffant ou réfrigérant le fluide de traitement est circulé en séquence simple ou multiple dans la chemise (4), le tuyau (13) et les interstices (27) et que ces doubles tuyaux (2,3) le tuyaux (13) ou les interstices (27) ont à l'extérieur une couche isolante (5, 16, 25) surmontée par un revêtement de finissage (6, 15, 28) de façon que le fluide de traitement est chauffé ou refroidi indépendamment de l'appareillage de processus, ce qui permet de détecter facilement les pertes ainsi que le montage et démontage simple et économique du système d'isolement sans toucher l'équipement de traitement.

2. Système selon la revendication 1, *caractérisé* par le fait que le double tuyau (2,3,) et son calorifugeage (5) et revêtement (6) forment un seul élément modulaire dans lequel le tuyau de traitement (1) qu'il faut isoler est infilé.

3. Système selon la revendication 1, *caractérisé* par le fait que le double tuyau (2,3,) avec son calorifugeage (5) et revêtement (6) est formé au moins par deux éléments moulés (2,3,5,6,2',3'.5',6') créant par des parois (7,7') radiales de fermeture au moins deux chambres (4,4') où s'écoule en équicourant ou contre-courant le fluide de chauffage ou de réfrigération et que ces éléments moulés ont des profils longitudinaux (8,8') pour l'assemblage à déclic autour du tuyau de traitement (1).

4. Système selon la revendication 1, *caractérisé* par le fait que l'élément modulaire (12) à tuyau (13) et sa plaque (14) porte à une extrémité de son revêtement extérieur (15) des profilages (17) longitudinaux, par exemple à U aptes à loger par ex. une section à lunettes pour l'accouplement articulé de deux éléments (12) adjacents afin de former ainsi un ensemble d'éléments modulaires enrobant l'appareillage à isoler.

5. Système selon la revendication 1, *caractérisé* par le fait que l'élément modulaire (12) à tuyau (13) et sa plaque (14) ont en général une section trapézoïdale pour favoriser l'adaptation de l'ensemble modulaire à la surface de l'appareillage qu'il faut calorifuger.

6. Système selon la revendication 1, *caractérisé* per le fait que l'ensemble des éléments modulaires (12) à tuyau (13) et leur plaques (14) est fixé d'un côté avec des goussets (20) de façon continue ou à traits, tandis que cet ensemble est attaché de l'autre côté moyennant un ancrage élastique à déclic (21).

7. Système selon la revendication 1, *caractérisé* par le fait que les chambres (4) des doubles tuyaux (2,3,) ou des tuyaux (13) et des plaques (14) des éléments modulaires sont connectées au sommet entr'elles ou bien à leur extrémité supérieure et inférieure par des sections tubulaires (9, 22) proprement façonnées pour assurer l'écoulement continu du fluide de chauffage ou de réfrigération.

8. Système selon la revendication 1, *caractérisé* par le fait que les extrémités munies de raccords tubulaires (9,22) entre les chambres (4) ou entre les tuyaux (13) sont calorifugées par des éléments moulés (5", 24) et proprement isolés.

9. Système selon la revendication 1, *caractérisé* par le fait que l'ensemble modulaire (12) à tuyau (13) et plaque (14) enveloppe le tuyau ou l'appareillage ayant n'importe quelle section (circulaire, elleptique ou polygonale) de façon que les plaques (14) s'appuient contre l'armature (18) qu'il faut calorifuger.

10. Système selon la revendication 1, *caractérisé* par le fait que l'élément de calorifugeage à interstice (27) comprend un élément moulé estérieur (25) d'isolement préfabriqué en bloc ou en plusieurs parties assemblables pour créer cet interstice (27) entre l'élément moulé et l'appareil à isoler (26) pour assurer la circulation du fluide de chauffage ou de réfrigération dans cet interstice (27).

11. Système selon les revendications 1 et 10, *caractérisé* par le fait que l'interstice (27) peut être unique ou multiple.

12. Système selon les revendications 1 et 10, *caractérisé* par le fait que des guipages (30) à l'intérieur du ou des interstices forment une gaine flexible trempée dans une résine thermodurcissable, munie d'entrées et de sorties (31) du fluide de chauffage ou de refroidissement, ces guipages (30) qui sont enfilés dans l'interstice ou les interstices (27) étant enflés et durcis moyennant la circulation d'eau chaude sous pression ce qui cause leur adhésion à la surface extérieure de l'appareil (26) qu'il faut isoler.
